# EUROPÄISCHE PATENTSCHRIFT

(11) **EP 2 376 751 B1**
(45) Veröffentlichungstag und Bekanntmachung des Hinweises auf die Patenterteilung: **28.12.2016**
(21) Anmeldenummer: 09740114.5
(22) Anmeldetag: 20.10.2009
(51) Int. Cl.: F01N 3/20

(54) **GERICHTETES EINFRIEREN VON TANKS**
DIRECTIONAL FREEZING OF TANKS
CONGÉLATION DIRECTIONNELLE D'UN RÉSERVOIR

(30) Priorität: 15.12.2008 DE 102008054645
(43) Veröffentlichungstag der Anmeldung: 19.10.2011
(73) Patentinhaber: Robert Bosch GmbH, 70442 Stuttgart (DE)
(72) Erfinder: LOLAS, Georgios, 70182 Stuttgart (DE); KLENK, Wolfgang, 74369 Loechgau (DE); SCHREIBER, Ruben, 71640 Ludwigsburg (DE)
(86) Internationale Anmeldenummer: PCT/EP2009/063711
(87) Internationale Veröffentlichungsnummer: WO 2010/072436

(56) Entgegenhaltungen:
- EP-A- 1 473 447
- DE-A1-102006 027 487

## Beschreibung

### Stand der Technik

Ein etabliertes Verfahren zur Stickoxidreduktion im Abgasmagerbetrieb einer Verbrennungskraftmaschine ist durch die selektive katalytische Reduktion (SCR) gegeben. Bei dem ammoniakbasierten SCR-Verfahren wird als Reduktionsmittel Ammoniak im Abgas vor einem entsprechenden Reduktionsmittelkatalysator eingegeben. Dabei wird bei heutigen Verfahren oftmals durch Einblasen eines wässrigen Harnstoff-Luft-Aerosols in das Motorabgas durch Thermolyse und anschließende (katalysierte) Hydrolyse das eigentliche Reduktionsmittel Ammoniak freigesetzt. Dieses Verfahren steht im Pkw- und im Nutzfahrzeugbereich unmittelbar vor dem Serieneinsatz.

Im Hinblick auf einen möglichen Pkw-Einsatz ist dieses Verfahren mit Lufteinblasung aufgrund der hohen Systemkomplexität hinsichtlich Kostenbauraum und Druckluftversorgung als wenig marktgerecht einzustufen. Ein weiteres Verfahren zur Druckluftunabhängigkeit sieht die Einspritzung der mittels einer Pumpe unter Druck stehenden Harnstofflösung mit selbst aufbereitenden Ventilen vor. Zur Anwendung kommen oftmals Ventile, wie sie aus der Benzineinspritzung bekannt sind. Schwierigkeiten bereitet hierbei unter anderem die Notwendigkeit der Kühlung eines derartigen elektrischen Ventils, das unmittelbar an der heißen Abgasanlage angebracht ist. Weiterhin ist die Wintertauglichkeit als problematisch einzustufen. Bei Temperaturen von unter -11°C gefriert die gebräuchliche Wasser-Harnstoff-Lösung und dehnt sich demzufolge aus. Somit ist zur Erzelung einer Wintertauglichkeit eines derartigen Ventiles sowie der weiteren betroffenen Systemkomponenten, wie z.B. Pumpe und Druckregelung sowie Tanks, ein erheblicher konstruktiver und damit die Systemkomplexität erhöhender Aufwand in Kauf zu nehmen. So ist eine eisdruckfeste Konstruktion, eine Beheizungsmöglichkeit sowie unter Umständen eine rücksaugende Pumpe erforderlich. Für den Einsatz in Pkws ergibt sich somit die Fragestellung nach einem in der Systemkomplexität einfachen und damit bezüglich Kosten und Kundenakzeptanz realistischen Konzept. Mit einem einfachen Konzept eröffnet sich die Möglichkeit eines breiten Einsatzes der Harnstoff-SCR-Technik zur Entstickung magerer, so z.B. dieselmotorischer Abgase und damit die Möglichkeit der Erfüllung zukünftig zu erwartender Stickoxidabgasgrenzwerte.

DE 196 48 643 C1 bezieht sich auf eine Stickoxid-Reduktionsmitteleinspritzung in einem Abgasstrom. Dabei wird das Reduktionsmittel durch eine Mehrzahl feiner Düsenöffnungen hindurch in Form feinster Strahlen mittels lokaler getakteter Überdruckerzeugung steuerbar in den Abgasstrom eingespritzt. Als Düsen werden dabei piezoelektrisch gesteuerte Düsen, ähnlich den Düsen, die in piezoelektrischen Tintenstrahldruckköpfen oder Düsen mit getakteten Heizwiderstandselementen, ähnlich bekannten Bubblejet-Tintenstrahldruckköpfen, eingesetzt. Die aus DE 196 46 643 C1 beschriebene Anordnung ist jedoch apparativ recht aufwändig und insbesondere hinsichtlich der aggressiven Fluide störanfällig, teuer und erscheint damit für Anwendungen im Automobilbereich ungeeignet. DE 10 2008 012 855 A1 bezieht sich auf ein Verfahren und ein Dosiersystem zur Schadstoffreduktion in Kraftfahrzeugabgasen. Aus DE 10 2006 012 855 A1 ist ein Verfahren zur Dosierung eines fluiden schadstoffreduzierenden Mediums, insbesondere einer wässrigen Harnstofflösung bekannt. Die wässrige Harnstofflösung wird in ein Kraftfahrzeugabgassystem eingebracht, wobei das fluide Medium zu einem Düsenmodul, insbesondere einer Düse oder einem Ventil befördert und mittels des Düsenmoduls in das Abgassystem eingeführt wird. Ein dem Düsenmodul vorgeordnetes Transportmittel wird mit dem Verfahren der Puisweitenmodulation angesteuert. Das Verfahren und das zugehörige Dosiersystem gewährleisten eine präzise und gegenüber Kältegraden relativ robuste Anordnung bzw. Dosierung insbesondere eines Reduktionsmittels unter Einsatz weniger Komponenten, welches in Kraftfahrzeugen eingesetzt werden kann.

EP1473447 offenbart einen Reduktionsmittelbehälter mit einer Wärmeisolierung.

### Offenbarung der Erfindung

Durch die erfindungsgemäß vorgeschlagene Lösung wird der im Fahrzeug, insbesondere in einem Personenkraftwagen, zur Verfügung stehende Bauraum für den Tank, in dem das Reduktionsmittel, insbesondere eine Harnstoff-WasserLösung, bevorratet wird, besser ausgenutzt. Es treten typischerweise nur dann Kräfte beim Vereisen des Reduktionsmittels während des Durchfrierens auf, wenn sich eine Kavität, d.h. eine im Eis oder zwischen Eis und den Wänden des Tanks eingeschlossene Flüssigkeitsblase bildet und diese dann durchfriert. Bei diesem Durchfrieren der Kavität wird in dieser der Druck so stark erhöht, bis durch ein Aufbrechen der Eisschicht oder durch Verformungen der Tankwand der Druck abgebaut werden kann.

Der erfindungsgemäß vorgeschlagenen Lösung folgend, werden Wärmeströme während des Gefrierens derart geleitet, dass es zu einer Eisbildung gezielt in einer Richtung kommt und somit eine Kavität und eine darin geschlossene Flüssigkeit, die beim Durchfrieren später einen hohen Druck aufbauen würde, nicht entstehen kann.

Ein gerichtetes Einfrieren des Mediums, welches im Tank bevorratet wird, wird dadurch erreicht, dass das Tanksystem so isoliert wird, dass unter allen denkbaren Betriebs- und Temperaturzuständen eine Eisbildung in einer vorbestimmten Reihenfolge erfolgt, d.h. dass das Eiswachstum in eine gewünschte Richtung gerichtet abläuft.

Das Tanksystem wird dort isoliert, wo bis zum Schluss während des Einfrierprozesses noch Flüssigkeit vorhanden sein soll. Falls ein Tanksystem, insbesondere ein Tank zur Aufnahme des gefrierenden Mediums, empfindliche Einbauten in seinem Inneren aufweist, wird erfindungsgemäß die Isolation am Tank derart angebracht, dass die Richtung des Eiswachstums derart verläuft, dass die Flüssigkeit, die das Eis durch die Volumenänderung beim Gefrieren vor sich herschiebt, in einen freien Bereich des das Medium bevorratenden Tanks fließt. Damit wird verhindert, dass sich Druck in der Flüssigkeit aufbaut und dieser sich entspannt, indem die Tankeinbauten und/oder die Tankwand deformiert und damit beschädigt werden können.

Erfindungsgemäß ist vorgegehen, den das gefrierende Medium bevorratenden Tank von unten nach oben durchfrieren zu lassen, so dass die Flüssigkeit durch das expandierende Eis von unten nach oben geschoben wird, bevorzugt in Bereiche, die zuvor mit Luft gefüllt waren. Erfindungsgemäß wird vorgeschlagen, dass durch eine gezielte Isolation des Tanksystems an der Oberseite und gegebenenfalls ganz oder teilweise an den Seiten ein gerichtetes Wachstum des Eises erfolgt.

### Kurze Beschreibung der Zeichnungen

Anhand der Zeichnung wird die Erfindung nachstehend eingehender beschrieben.

Es zeigt:
- Figur 1: eine Detailansicht eines partiellen Isolationselementes für einen ein Reduktionsmittel bevorratenden Tank und
- Figur 2: eine schematische Darstellung einer aus mehreren Isolationselementen zusammengesetzten Isolation eines Tanks zur Bevorratung eines Reduktionsmittels.

### Ausführungsformen

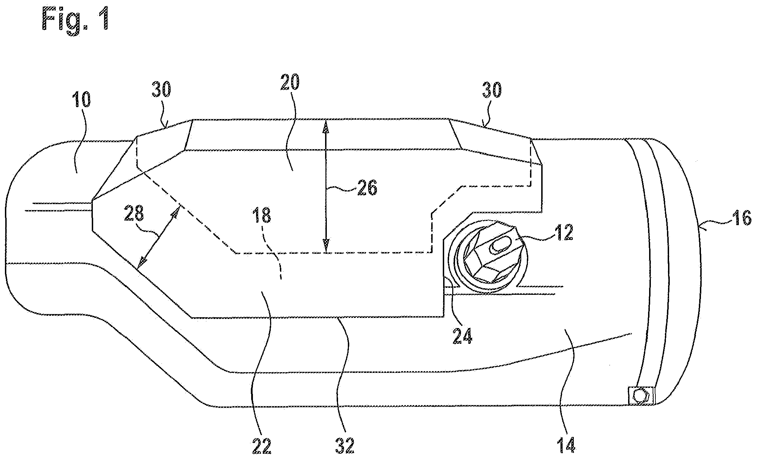

Der Darstellung gemäß Figur 1 ist eine erste Ausführungsvariante der erfindungsgemäß vorgeschlagenen Lösung zu entnehmen.

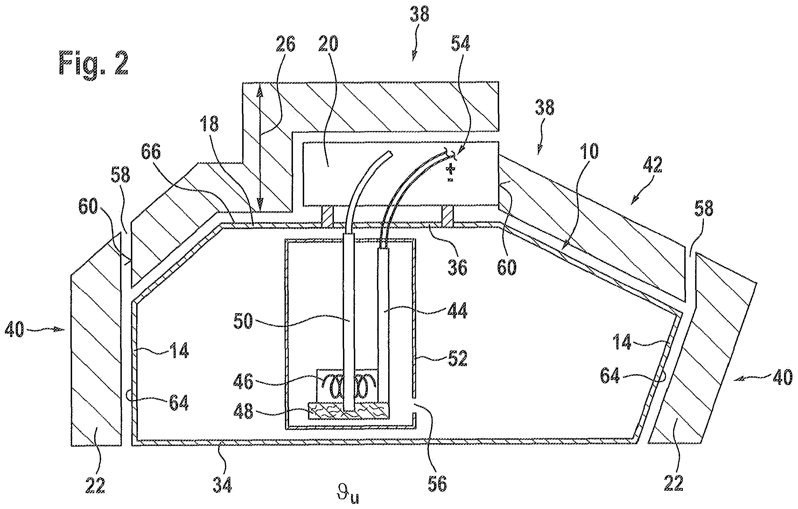

Wie Figur 1 zeigt, umfasst ein Tank 10, in dem ein Reduktionsmittel zur Reduktion von Stickoxiden im Abgas von Brennkraftmaschinen bevorratet wird, einen Stutzen 12, über welchen der Tank 10 mit eben diesem Reduktionsmittel befüllt wird. Bei dem Reduktionsmittel handelt es sich um Harnstoff bzw. um eine wässrige Harnstofflösung. Der Tank 10 ist durch eine Außenwand 14 sowie eine Stirnseite 16 begrenzt. Auf einer Tankdecke 18, die Teil der Außenwand 14 des das Reduktionsmittel aufnehmenden Tanks 10 ist, befinden sich Anbaukomponenten 20. Bei den Anbaukomponenten kann es sich zum Beispiel um ein Förderaggregat in Gestalt einer Pumpe oder dergleichen handeln. Des Weiteren zählen zu den Anbaukomponenten 20 gegebenenfalls eine elektrische Kontaktierung eines in Figur 1 nicht dargestellten, in das Innere des Tanks 10 hineinragenden Füllstandssensors (vergleiche Figur 2) sowie ein Rücklauf, der gegebenenfalls mit einer Drosselstelle versehen sein kann.

Wie aus der perspektivischen Darstellung gemäß Figur 1 des Weiteren hervorgeht, befindet sich an der Oberseite des Tanks 10 gemäß der Darstellung in Figur 1 ein Isolationselement 22. Das Isolationselement 22 passt sich in vorteilhafter Weise mit seiner der Außenwand 14 des Tanks 10 zuweisenden Seite an die Geometrie eben dieser Oberseite des Tanks 10 an. Aus der Darstellung gemäß Figur 1 geht hervor, dass es sich bei der dort dargestellten Isolation um ein einzelnes Isolationselement 22 handelt, welches die Anbaukomponenten 20, die an der Außenseite der Außenwand 14 an der Tankdecke 18 des Tanks 10 vorgesehen sind, haubenartig überdeckt. Das Isolationselement 22 wird bevorzugt aus einem aufgeschäumten Kunststoffmaterial hergestellt, wie z.B. EPP.

Das in der Darstellung gemäß Figur 1 wiedergegebene partielle Isolationselement 22 umfasst eine Aussparung 24, die sich im Bereich des Stutzens 12 erstreckt und diesen gürtelkreisartig umschließt. Das Isolationselement zur partiellen Isolierung an der Oberseite des das Reduktionsmittel aufnehmenden Tanks 10 ist in einer Dicke 26 ausgebildet. Die Dicke 26 kann zwischen 10 mm und 20 mm liegen und in an Einbauten angrenzenden Bereichen des Tanks 10 auch deutlich darüber liegen.

Entsprechend der Geometrie einer Tiefe 28 des Tanks 10 erstreckt sich das der partiellen Isolation der Oberseite des Tanks 10 dienende Isolationselement 22 senkrecht zur Zeichenebene und deckt die Außenseite der Tankdecke 18 im Bereich der Außenwand 14 des das Reduktionsmittel aufnehmenden Tanks 10 ab. Wie aus der Darstellung gemäß Figur 1 des Weiteren hervorgeht, umfasst das der partiellen Isolation des Tanks 10 dienende partielle Isolationselement 22 Anflachungen 30, die aus Bauraum- und Montagegründen je nach zur Verfügung stehendem Einbauraum erforderlich sein können oder auch entfallen können.

Der Darstellung gemäß Figur 1 ist des Weiteren zu entnehmen, dass das der partiellen Isolation der Oberseite des Tanks 10 dienende Isolationselement 22 Aufsatzflächen 32 aufweist, mit denen die Unterseite des Isolationselements 22 auf der Außenseite der Außenwand 14 des das Reduktionsmittel aufnehmenden Tanks 10 aufsetzt. Bevorzugt ist die mindestens eine Aufsatzfläche 32 des Isolationselementes 22 so beschaffen, dass diese ohne zu scheuern auf der Außenseite der Außenwand 14 des Tanks 10 aufsitzt. Es ist anzustreben, dass kein Luftstrom zwischen dem isolationselement 22 und der Außenwand 14 des Tanks 10 hindurchtritt, da dieser die isolationswirkung erheblich beeinträchtigen würde. Verbleibt hingegen ein Luftspalt, in dem ein Luftpolster verbleibt zwischen der Außenwand 14 und der dieser zuweisenden Seite des Isolationselementes 22, so ist dies der Isolation des Reduktionsmittels im Tank 10 förderlich.

Aus der Darstellung gemäß Figur 1 geht hervor, dass das der partiellen Isolation des Tanks 10 dienende Isolationselement 22 auf der Oberseite der Außenwand 14 des Tanks 10 aufgenommen ist. Durch diese in Figur 1 dargestellte Ausführungsvariante wird erreicht, dass bei niedrigen Außentemperaturen ∂*ᵤ* ein Gefrieren des im Tank 10 bevorrateten Reduktionsmittels von der Unterseite ausgehend erfolgt. Durch das Aufbringen des der partiellen Isolation des Tanks 10 dienenden Isolationselementes 22 an der Außenseite der Außenwand 14 an der Oberseite des Tanks 10 wird ein gezieltes Durchfrieren des im Tank 10 bevorrateten Reduktionsmittels erreicht. Durch die erfindungsgemäß vorgeschlagene Lösung wird vermieden, dass typischerweise im Eis auftretende Kräfte während des Durchfrierens vermieden werden, da sich innerhalb des im Tank 10 bevorrateten Reduktionsmittels keine Kavität, d.h. eine im Eis eingeschlossene Flüssigkeitsblase ausbildet, die dann selbst durchfriert. Es werden unzulässig hohe Druckspitzen vermieden, da die Wärmeströme während des Gefrierens so geleitet werden, dass sich eine Eisbildung im Inneren des Tanks 10 gezielt in eine Richtung hin erstreckt und somit eine Kavität, mit einem eingeschlossenen Flüssigkeitsvolumen, die bei späteren Durchfrieren einen Druck aufbauen würde, von vorneherein vermieden wird.

Durch die erfindungsgemäß vorgeschlagene Lösung einer Isolation des das Reduktionsmittel bevorratenden Tanks 10 zumindest an dessen Oberseite wird ein gerichtetes Einfrieren des im Tank 10 bevorrateten Reduktionsmittels erreicht. Die Eisbildung erfolgt in eine Richtung, in der sich ein Freiraum bzw. ein Luftraum befindet, so dass die Luft bei Eisbildung und damit einhergehender Volumenvergrößerung des Reduktionsmittels beim Vereisen durch das Entlüftungsystem des Tanks 10 entweichen kann und keine Verformung der Tankwände bzw. eine Beschädigung der im Innenraum des Tanks 10 aufgenommenen Komponenten erfolgt. Typischerweise wird der Tank 10 zur Aufnahme des Reduktionsmittels typischerweise dort isoliert, wo bis zum Schluss während des Gefrierens des Reduktionsmittels nur Flüssigkeit vorhanden sein soll.

Der Darstellung gemäß Figur 2 ist eine weitere Ausführungsvariante der erfindungsgemäß vorgeschlagenen Lösung zur Erzeugung eines gerichteten Einfrierens eines Mediums innerhalb eines Tanks zu entnehmen.

Der Darstellung gemäß Figur 2, bei der es sich um eine Schnittdarstellung handelt, ist zu entnehmen, dass der Tank 10 einen Tankboden 34 umfasst, an dem keine Isolation vorgesehen ist. Es besteht jedoch ebenso die Möglichkeit, auch den Tankboden 34 des Tanks 10 auf der der Straße zuweisenden Seite zu isolieren. Auf den Tankboden 34 des das Reduktionsmittel bevorratenden Tanks 10 wirkt, falls keine Isolation vorgesehen ist, die Außen- bzw. Umgebungstemperatur, angedeutet durch ∂*ᵤ*. In Abwandlung der in Figur 1 dargestellten Ausführungsvariante sind in der Darstellung gemäß Figur 2 auch Wandaußenseiten 64 der Tankaußenwände 14 des Tanks 10 mit Isolationselementen 22 versehen. Die Tankdecke 18 des das Reduktionsmittel bevorratenden Tanks 10 ist von einem weiteren Isolationselement 22 übergriffen, welches im Wesentlichen haubenförmig ausgebildet ist. Die Kontur an der Innenseite des Isolationselementes 22 einer Isolation 38, sei sie ein- oder mehrteilig ausgebildet, überdeckt nicht nur eine Deckenaußenseite 62 der Tankdecke 18 des Tanks 10, sondern auch gegebenenfalls an der Tankaußenseite angeordnete Anbaukomponenten 20, wie zum Beispiel ein Förderaggregat in Gestalt einer Pumpe oder dergleichen, wie in Zusammenhang mit Figur 1 bereits angeklungen ist.

Der in Figur 2 im Schnitt dargestellte Tank 10 umfasst eine Zugangsöffnung 36, über welche Einbaukomponenten des Tanks 10, so zum Beispiel ein Füllstandssensor 44, ein Heizelement 46 und auch ein Filter 48 sowie eine Sauglanze 50 im Inneren des das Reduktionsmittel bevorratenden Tanks 10 montierbar sind. Gegebenenfalls kann - ein entsprechend großes Volumen des Tanks 10 vorausgesetzt - über die Zugangsöffnung 36 in der Tankdecke 18 ein Schwapptopf 52 am Tankboden 34 montiert werden. Der Schwapptopf 52 hat ein im Wesentlichen zylindrisches Aussehen und umfasst an seiner Unterseite eine Zulauföffnung 56, über welche im Tank bevorratetes Reduktionsmittel dem Innenraum des Schwapptopfes 52 zuläuft. Der Schwapptopf 52 dient generell zur Dämpfung von Schwappbewegungen des Reduktionsmittels, das im Tank 10 bevorratet wird. Bezugszeichen 54 bezeichnet elektrische Kontaktierungen des Füllstandssensors 44. Der Füllstandssensor 44 erstreckt sich im Wesentlichen in vertikale Richtung durch den Schwapptopf 52. Über die Sauglanze 50 wird durch das deren Ansaugöffnung vorgeschaltete Filterelement 48 und gegebenenfalls durch das Heizelement 46 Reduktionsmittel an über ein in Figur 2 nicht dargestelltes Förderaggregat angesaugt und einem Dosiermodul zugleitet, über welches das Reduktionsmittel in das Abgas einer Verbrennungskraftmaschine in Form eines Sprühnebeis eingebracht wird.

Der Darstellung gemäß Figur 2 ist des Weiteren zu entnehmen, dass bei einer mehrteiligen Ausführung der Isolation 38 an Wandseiten 40 des Tanks einzelne, die Außenwände 14 vollständig oder teilweise überdeckende Isolationselemente 22 angebracht werden können. Zwischen diesen Isolationselementen, die an der Wandseite 40 vorgesehen sind, und dem haubenförmig ausgebildeten, eine Deckenseite 42 der Außenwand 14 abdeckenden Isolationselement 22 entstehen Trennfugen 58. Im Bereich der Trennfugen 58 liegen die einzelnen Komponenten einer mehrteilig ausgebildeten Isolation 38 aneinander entlang von Anlageflächen 60 an. Die von Anlageflächen 60 begrenzten Trennfugen 58 sind so gestaltet, dass eine sehr gute Isolationswirkung gewährleistet bleibt. Luftspalte zwischen der Isolation bzw. den Isolationselementen 22 und der Außenwand 14 des Tanks 10 sind so gestaltet, dass kein Luftstrom durch den Luftspalt zieht, sondern bevorzugt ein die Isolation unterstützendes Luftpolster in diesem aufrechterhalten bleibt. Die einzelnen Isolationselemente 22 können abhängig vom ausgewählten Befestigungskonzept und abhängig vom Tankbefestigungskonzept am Tank 10 befestigt werden. An diesem können zum Beispiel wannenförmige Ausschnitte für Spannwände ausgebildet sein, die einerseits den Tank halten und auch zur Befestigung der Isolationselemente entsprechend konfigurierte Aussparungen aufweisen können. Darüber hinaus besteht die Möglichkeit, die Isolationselemente über eine Blechwanne zu befestigen, in die der Tank eingelassen ist. Bevorzugt werden die Isolationselemente 22 aus einem Material wie Kunststoffschaum, Styropor, EPP oder dergleichen gefertigt.

Bei der in Figur 2 dargestellten Lösung befinden sich im Inneren des Tanks empfindliche Einbauten in Gestalt des Füllstandssensors 55, des Heizelementes 56, des Filterelementes 48 und auch der Sauglanze 50. Demzufolge werden die Isolation 38 bzw. einzelne eine partielle Isolation übernehmende Isolationselemente 22 so angeordnet, dass die Richtung eines sich einstellenden Eiswachstums beim Gefrieren des im Tank 10 bevorrateten Reduktionsmittels so liegt, dass die Flüssigkeit, die das Eis durch die Volumenänderung beim Gefrieren vor sich herschiebt, in einen freien Bereich des Tanks fließen kann. Dadurch wird verhindert, dass sich Druck in der Flüssigkeit aufbaut und dieser sich entspannt, indem die Tankeinbauten und/oder die Außenwand 14 des Tanks 10 verformt wird. In der Darstellung gemäß Figur 2 ist die Eiswachstumsrichtung demnach so zu legen, dass diese sich im Wesentlichen ohne Ausbildung einer Kavität in die einbautenfreien Bereiche im Innenraum des Tanks 10 erstreckt.

Bevorzugt wird angestrebt, das im Tank 10 bevorratete Reduktionsmittel von der Unterseite, d.h. ausgehend vom Tankboden 34, in Richtung auf die Tankdecke 18 durchfrieren zu lassen. Dadurch wird erreicht, dass die flüssige Phase des Reduktionsmittels, das im Tank 10 bevorratet ist, durch das expandierende Eis von unten nach oben geschoben wird. Dies bedeutet, dass Flüssigkeit im oberen Bereich unterhalb der Tankdecke 18 verbleibt, der zuvor mit Luft gefüllt war. Eine Luftverdrängung, die durch das Expandieren des Reduktionsmittels, d.h. durch die Eisbildung erfolgt, kann durch das Belüftungssystem des das Reduktionsmittel aufnehmenden Tanks 10 entweichen. Der erfindungsgemäß vorgeschlagenen Lösung folgend, kann durch die Isolation gemäß der Ausführungsvarianten in Figur 1 mit einem eine partielle Isolation darstellenden Isolationselement 22 sowie mit der vollflächigen Isolation 38 gemäß der Darstellung in Figur 2 eine Isolation des Tanks 10 derart erreicht werden, dass diese sich im Wesentlichen an der Oberseite des Tanks 10 befindet und gegebenenfalls ganz oder teilweise im Bereich der Wandseiten 40 an den Außenwänden 14. Durch diese Anordnung wird die Richtung des Eiswachstums in Freiräume im Inneren des Tanks 10 gelenkt.

Aus der Darstellung gemäß Figur 2 geht hervor, dass das haubenartig ausgebildete Isolationselement 22, welches die Anbaukomponenten 20 auf der Außenseite der Außenwand 14 an der Oberseite des Tanks 10 abdeckt, in einer Dicke 26, die im Bereich je nach Wärmeleitwert der Isolation typischerweise zwischen 5 mm und 20 mm liegt, ausgeführt ist. Es können die Isolation 38 bildende Isolationselemente 22 eingesetzt werden, die aus Materialien wie z.B. Aluminiumfolie oder eine aufgeschäumte Aluminiumfolie, Styropor oder EPP gefertigt sind und die je nach Wärmeleitwert des gewählten Materials einen Einfluss auf deren Dicke 26 haben. Abhängig von der Einbaulage des Tanks sowie abhängig von der Anordnung und Dimensionierung der Einbauten innerhalb des Tanks 10, können im Bereich von Einbauten, die beispielsweise im Inneren des Tanks 10 angeordnet sind, z.B. Füllstandssensor, Siebe und dergleichen, die Isolationselemente 22 eine größere Dicke 26 aufweisen.

In vorteilhafter Weise lässt sich auch die Karosserie des Fahrzeugs als Isolation für einen Teil des Tanks 10 nutzen, wobei eine Optimierung der durch die Karosserie möglichen Isolation der Außenwände 14 bzw. der Tankdecke durch Anbringen einzelner, entsprechend komplementär zur Geometrie des Tanks 10 geformter Isolationselemente 22 optimiert werden kann.

## Patentansprüche

1. Tank (10) zur Bevorratung eines Reduktionsmittels, insbesondere Harnstoff oder eine wässrige Harnstofflösung, das Umgebungstemperatur ∂*ᵤ* ausgesetzt ist, wobei der Tank (10) einen Tankboden (34), Tankwände (14) und eine Tankdecke (18) umfasst, **dadurch gekennzeichnet, dass** zumindest an der Oberseite des Tanks (10) eine ein Einfrieren des bevorrateten Reduktionsmittels in eine gezielte Richtung von unten nach oben bewirkende Isolation (22, 38) angeordnet ist, wobei die Isolation haubenförmig ausgeführt ist und eine zur Außengeometrie des Tanks (10) an der Oberseite komplementäre Geometrie aufweist und wobei an dem Tankboden (34) keine Isolation vorgesehen ist.

2. Tank (10) gemäß Anspruch 1, **dadurch gekennzeichnet, dass** die Isolation (22, 38) an der Tankdecke (18) angebrachte Anbaukomponenten (20) überdeckt.

3. Tank (10) gemäß Anspruch 1, **dadurch gekennzeichnet, dass** die Isolation (22, 38) als partielles Isolationselement oder als vollflächige Isolation der Oberseite des Tanks (10) ausgeführt ist.

4. Tank (10) gemäß Anspruch 1, **dadurch gekennzeichnet, dass** die Isolation (22, 38) einteilig oder mehrteilig ausgeführt ist und in mehrteiliger Ausführung insbesondere die Tankwände (14) überdeckende Isolationselemente (22) umfasst.

5. Tank (10) gemäß der vorhergehenden Ansprüche, **dadurch gekennzeichnet, dass** zwischen der einer Deckenaußenseite (62) und/oder Wandaußenseiten (64) des Tanks (10) zuweisenden Seite der Isolation (22, 38) und der Deckenaußenseite (62) und/oder Wandaußenseiten (64) ein Luftspalt verbleibt.

6. Tank (10) gemäß Anspruch 4, **dadurch gekennzeichnet, dass** bei mehrteiliger Ausführung der Isolation (22, 38) deren Einzelelemente Anlageflächen (60) aufweisen, die an Trennfugen (58) einander gegenüberliegen.

7. Tank (10) gemäß Anspruch 1, **dadurch gekennzeichnet, dass** die Isolation (22, 38) aus geschäumtem Kunststoffmaterial, aus Styropor oder aus EPP gefertigt ist.

8. Tank (10) gemäß Anspruch 1, **dadurch gekennzeichnet, dass** die Isolation (22, 38) in einer Dicke (26) zwischen 5 mm und 20 mm ausgeführt ist und stellenweise abhängig von der Geometrie des Tanks 10 auch eine größere Dicke (26) aufweist.

## Claims

1. Tank (10) for storing a reducing agent, in particular urea or an aqueous urea solution, said reducing agent being exposed to ambient temperature ∂ᵤ, wherein the tank (10) comprises a tank base (34), tank walls (14) and a tank cover (18), **characterized in that** insulation (22, 38) bringing about freezing of the stored reducing agent in a targeted direction from the bottom upwards is arranged at least on the upper side of the tank (10), wherein the insulation is of hoodshaped design and has a geometry which is complementary with respect to the external geometry of the tank (10) on the upper side, and wherein no insulation is provided on the tank bottom (34).

2. Tank (10) according to Claim 1, **characterized in that** the insulation (22, 38) covers add-on components (20) attached to the tank cover (18).

3. Tank (10) according to Claim 1, **characterized in that** the insulation (22, 38) is designed as a partial insulation element or as full insulation of the upper side of the tank (10).

4. Tank (10) according to Claim 1, **characterized in that** the insulation (22, 38) is of single-part or multi-part design and, in multi-part design, comprises in particular insulation elements (22) covering the tank walls (14).

5. Tank (10) according to one of the preceding claims, **characterized in that** an air gap remains between that side of the insulation (22, 38) which faces a cover outer side (62) and/or wall outer sides (64) of the tank (10) and the cover outer side (62) and/or wall outer sides (64).

6. Tank (10) according to Claim 4, **characterized in that**, in the case of a multi-part design of the insulation (22, 38), the individual elements of the insulation have contact surfaces (60) which lie opposite one another at separating joints (58).

7. Tank (10) according to Claim 1, **characterized in that** the insulation (22, 38) is manufactured from foamed plastics material, from Styropor or from EPP.

8. Tank (10) according to Claim 1, **characterized in that** the insulation (22, 38) is formed in a thickness (26) of the between 5 mm and 20 mm and also has a greater thickness (26) in some places depending on the geometry of the tank (10).

## Revendications

1. Réservoir (10) pour le stockage d'un agent réducteur, en particulier d'urée ou d'une solution aqueuse d'urée, qui est exposé à une température ambiante ∂*ᵤ*, dans lequel le réservoir (10) comprend un fond de réservoir (34), des parois de réservoir (14) et un plafond de réservoir (18), **caractérisé en ce qu'**une isolation (22, 38) provoquant une congélation de l'agent réducteur stocké dans une direction appropriée de bas en haut est disposée au moins sur le côté supérieur du réservoir (10), dans lequel l'isolation est réalisée en forme de hotte et présente une géométrie complémentaire à la géométrie extérieure du réservoir (10) sur le côté supérieur et dans lequel il n'est pas prévu d'isolation sur le fond de réservoir (34).

2. Réservoir (10) selon la revendication 1, **caractérisé en ce que** l'isolation (22, 38) recouvre des composants ajoutés (20) installés sur le plafond de réservoir (18).

3. Réservoir (10) selon la revendication 1, **caractérisé en ce que** l'isolation (22, 38) est réalisée sous forme d'élément d'isolation partiel ou d'isolation de toute la surface du côté supérieur du réservoir (10).

4. Réservoir (10) selon la revendication 1, **caractérisé en ce que** l'isolation (22, 38) est réalisée en une seule partie ou en plusieurs parties et dans la réalisation en plusieurs parties comprend des éléments d'isolation (22) recouvrant en particulier les parois de réservoir (14).

5. Réservoir (10) selon les revendications précédentes, **caractérisé en ce qu'**il subsiste une couche d'air entre le côté de l'isolation (22, 38) tourné vers un côté extérieur de plafond (62) et/ou des côtés extérieurs de parois (64) du réservoir (10) et le côté extérieur de plafond (62) et/ou des côtés extérieurs de parois (64).

6. Réservoir (10) selon la revendication 4, **caractérisé en ce que**, dans le cas d'une réalisation de l'isolation (22, 38) en plusieurs parties, ses éléments individuels présentent des faces d'appui (60), qui sont opposées l'une à l'autre dans des joints de séparation (58).

7. Réservoir (10) selon la revendication 1, **caractérisé en ce que** l'isolation (22, 38) est fabriquée en matériau de matière plastique expansé, en Styropor ou en EPP.

8. Réservoir (10) selon la revendication 1, **caractérisé en ce que** l'isolation (22, 38) est réalisée en une épaisseur (26) entre 5 mm et 20 mm et présente localement aussi une plus grande épaisseur (26) en fonction de la géométrie du réservoir (10).
